Europäisches Patentamt

European Patent Office

Office européen des brevets

(11) Numéro de publication: **0 263 970 B1**

# FASCICULE DE BREVET EUROPEEN

(45) Date de publication de fascicule du brevet:
**07.08.91**

(51) Int. Cl.⁵: **F16F 7/14**

(21) Numéro de dépôt: **87113107.4**

(22) Date de dépôt: **08.09.87**

(54) Dispositif amortisseur de chocs et de vibrations.

(30) Priorité: **12.09.86 FR 8612801**

(43) Date de publication de la demande:
**20.04.88 Bulletin 88/16**

(45) Mention de la délivrance du brevet:
**07.08.91 Bulletin 91/32**

(84) Etats contractants désignés:
**AT BE CH DE ES FR GB GR IT LI LU NL SE**

(56) Documents cités:
**DE-U- 7 306 006          FR-A- 2 138 543**
**FR-A- 2 451 511          GB-A- 7 878**
**GB-A- 2 052 328          US-A- 2 873 109**

(73) Titulaire: **INTERTECHNIQUE (Société anonyme)**
**Boîte Postale 1**
**F-78374 Plaisir(FR)**

(72) Inventeur: **Pietrzak, Patrick**
**3 rue de Feuillancourt**
**F-78100 Saint Germain En Laye(FR)**

(74) Mandataire: **Weinmiller, Jürgen et al**
**Lennéstrasse 9 Postfach 24**
**W-8133 Feldafing(DE)**

## Description

L'invention concerne un dispositif amortisseur de chocs et de vibrations ayant une structure élastique comportant un élément métallique et des moyens de fixation permettant de l'interposer entre deux organes, cette structure étant enrobée dans une masse de matériau élastomère à taux d'amortissement interne élevé adhérant à cette structure, traversée d'au moins un trou cylindrique de dimension telle que la masse recouvre le ou les éléments métalliques sur une épaisseur interne et externe approximativement constante.

Cette invention est utilisable chaque fois que l'on doit éviter la transmission directe à une charge de chocs ou vibrations reçus par un support. A titre d'exemple d'application du dispositif, on peut citer la suspension d'éléments de machines, de véhicules, de systèmes d'armes et celle de composants d'engins spatiaux dont le lanceur présente, lors du tir, des vibrations importantes.

On connaît déjà par le document FR-A-2 138 543 un dispositif amortisseur pour défenses d'accostage, en forme de manchon creux en caoutchouc, renforcé par des anneaux métalliques élastiques en bande métallique enroulée, disposés perpendiculairement à l'axe du manchon, relié par une tige métallique supportée par des chaînes à la paroi verticale d'un quai à protéger. Ce dispositif travaille essentiellement en service en flexion quand un navire vient le heurter lors d'un accostage.

La présente invention a pour but de procurer un dispositif amortisseur dans lequel le matériau élastomère travaille essentiellement en compression et/ou en cisaillement et assure un amortissement élevé dans un large domaine de fréquences.

Le dispositif de l'invention est caractérisé en ce que l'élément métallique est un câble enroulé en hélice et dont chaque spire est emprisonnée dans des barrettes, en des zones diamétralement opposées, à l'aide d'agrafes de partie externe de niveau avec la partie externe de la masse.

De préférence, le matériau élastomère est un élastomère siliconé, solidarisé à la structure par vulcanisation à chaud sur le métal du câble revêtu d'un adhésif. Cet élastomère siliconé peut être celui vendu sous la marque "RHODORSIL".

L'invention sera mieux comprise à la lecture de la description qui suit donnant, à titre d'exemples, un mode particulier d'exécution. La description se réfère aux dessins qui l'accompagnent, dans lesquels :

- La figure 1 montre, en élévation et en coupe partielle, un amortisseur suivant un mode d'exécution ;
- La figure 2 est une vue de dessus de l'amortisseur en coupe partielle suivant la ligne II-II de la figure 1 ;
- La figure 3 est une vue en perspective du dispositif de la figure 1, depuis la gauche de cette figure ;
- La figure 4 est une vue en coupe suivant la ligne IV-IV de la figure 3.

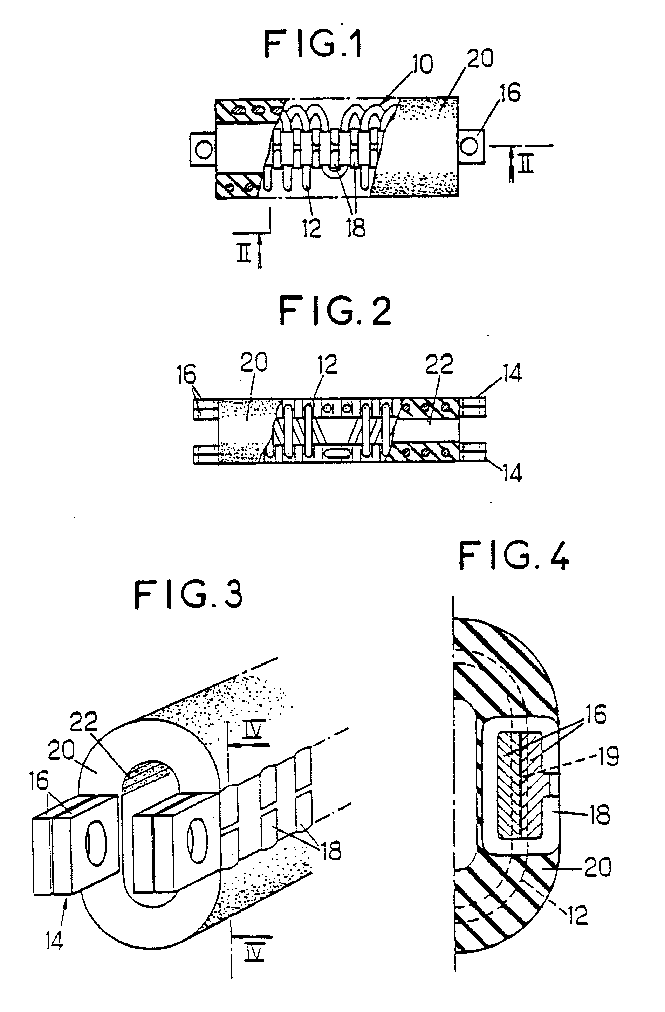

Le dispositif, montré en figures 1 à 4, présente une structure élastique et métallique 10 comprenant un ressort 12 constitué d'un tronçon de câble métallique multibrins enroulé en hélice dont les spires traversent deux barrettes 14 en des zones diamétralement opposées. Les barrettes sont munies, dans leur partie terminale, au-delà des extrémités du tronçon, de moyens de fixation constitués par des trous de passage de vis. Chaque barrette 14 consiste en deux lames 16 solidarisées par des agrafes 18. Des évidements semi-cylindriques 19, ménagés dans les faces en regard des lames 16, constituent des couloirs cylindriques emprisonnant les spires.

La structure 10 est enrobée dans une masse surmoulée 20 de matériau élastomère à taux d'amortissement interne élevé. Le tronçon de câble 12 est totalement noyé dans cette masse, percée d'un trou axial 22. Ce trou est avantageusement de dimensions telles que l'épaisseur de matériau élastomère soit du même ordre à l'intérieur et à l'extérieur des spires. Une solution satisfaisante consiste à utiliser une masse qui est de niveau avec la partie externe des agrafes 18. Ainsi, on obtient un effet d'amortissement supplémentaire important sans augmenter notablement le volume occupé.

Dans la pratique, on utilisera en général un élastomère siliconé vulcanisable à chaud, appliqué sur la structure dans des conditions telles qu'il adhère fortement à cette structure. Ce résultat peut être atteint par des techniques classiques de surmoulage, à condition d'avoir préalablement revêtu le tronçon de câble d'un produit d'adhésion. Parmi les élastomères utilisables, on peut notamment citer le matériau vendu sous la marque "RHODORSIL". L'expérience a montré qu'un dispositif suivant l'invention ayant la constitution montrée en figures 1 à 4 permet d'amortir de façon satisfaisante les vibrations dans un domaine de 5 à 3000 Hz tout en restant utilisable dans un large domaine thermique, allant typiquement de - 50 à + 130° C.

## Revendications

1. Dispositif amortisseur de chocs et de vibrations ayant une structure élastique (10) comportant un élément métallique (12) et des moyens de fixation permettant de l'interposer entre deux organes, cette structure étant enrobée dans une masse (20) de matériau élastomère à taux d'amortissement interne élevé adhérant à cette structure, traversée d'au moins un trou cylindrique (22) de dimension telle que la masse recouvre le ou les éléments métalliques sur une épaisseur interne et externe approximativement constante, caractérisé en ce que l'élément métallique est un câble (12) enroulé en hélice et dont chaque spire est emprisonnée dans des barrettes (14), en des zones diamétralement opposées, à l'aide d'agrafes (18) de partie externe de niveau avec la partie externe de la masse (20).

2. Dispositif selon la revendication 1, caractérisé en ce que le matériau élastomère est un élastomère siliconé, solidarisé à la structure par vulcanisation à chaud sur le métal du câble revêtu d'un adhésif.

## Claims

1. A shock and vibration damping device having an elastic structure (10) comprising a metallic element (12) and fixing means adapted to interpose it between two components, said structure being embedded in a mass (20) of elastomeric material having an elevated inner damping factor and adhering to said structure, and being traversed by at least one cylindrical hole (22) having dimensions such that the mass covers the one or more metallic elements on its inner and its outer side by a constant thickness layer, characterized in that the metallic element is a helically wound cable (12), each turn of which is arrested at diametrically opposite sides in rods (14) by means of clamps (18), whose outer face is flush with the outer face of the mass (20).

2. A device according to claim 1, characterized in that the elastomeric material is a siliconic elastomer anchored to the structure by hot vulcanization onto the metal of the cable coated with an adhesive.

## Patentansprüche

1. Stoß- und Vibrationsdämpfervorrichtung mit einer elastischen Struktur (10), die ein Metallelement (12) und Befestigungsmittel zum Befestigen der Vorrichtung zwischen zwei Bauteilen aufweist, wobei die Struktur in einer Masse (20) aus einem Elastomermaterial mit erhöhtem innerem Dämpfungsgrad eingebettet ist, die an der Struktur haftet, wobei diese Struktur von mindestens einem zylindrischen Loch (22) mit solchen Abmessungen durchdrungen ist, daß die Masse das oder die Metallelemente innen wie außen mit einer annähernd konstant dicken Schicht überzieht, dadurch gekennzeichnet, daß das Metallelement ein spiralig gewundes Kabel (12) ist, bei dem jede Windung in einander diametral gegenüberliegenden Zonen in Stäben (14) mit Hilfe von Klammern (18) arretiert ist, deren Außenpartie niveaugleich in der Außenpartie der Masse (20) liegt.

2. Vorrichtung nach Anspruch 1, dadurch gekennzeichnet, daß das Elastomermaterial ein silikonhaltiges Material ist, das an der Struktur durch Warmvulkanisieren auf dem Metall des mit einem Haftmittel überzogenen Kabels befestigt ist.

# FIG.1

# FIG.2

# FIG.4

# FIG.3